# EUROPEAN PATENT APPLICATION

(11) **EP 0 572 097 A1**
(43) Date of publication of application: **01.12.1993**
(21) Application number: 93201529.0
(22) Date of filing: 27.05.1993
(51) Int. Cl.: B08B 3/02, B65G 21/20

(54) **Washing device**

(30) Priority: 27.05.1992 NL 9200946
(71) Applicant: MAFO HOWDEN B.V., NL-7575 AW Oldenzaal (NL)
(72) Inventor: Knippers, Gradus Bernardus Josef, NL-7591 VW Denekamp (NL)
(74) Representative: Bruin, Cornelis Willem

(57) **Abstract**

The invention comprises a washing tunnel, an open conveyor (1) for transporting objects (2) for washing, spray nozzles (5) placed under the conveyor (1) for feeding washing liquid (4) under pressure and a number of elements (7) suspended above the conveyor (1) for continuous pivoting between end positions, whereof the one end position is located close to the conveyor (1) and the other at a distance therefrom.

## Description

The invention relates to a washing device.

During cleaning of for instance crates and barrels in a washing device an upward directed force is exerted on the crates and barrels by upward directed jets of washing liquid. To prevent that objects for cleaning can be moved by the jets of washing liquid a provision is required for positioning the objects for cleaning in vertical direction.

An existing solution is formed by horizontally pivotable pins fixed to the side wall of the washing device and adjustable to different heights. During use of the washing device a number of the pins will be pushed aside by a moving object for cleaning. The higher placed pins are not pushed aside. Of these pins not pushed aside, a limited portion, only the lower layer, forms a limitation to the vertical freedom of movement of the object for cleaning. This solution has the drawbacks that a large number of pins is required of which only a number effectively fulfil their function, that a small vertical freedom of movement still remains when the undermost pins that have not been pushed away are not situated precisely above the top part of the object for cleaning, and that without changing the adjusted heights of the pins it is not possible to clean objects with a length differing from the adjusted values.

A second existing solution is formed by a guide element arranged adjustably above the objects for cleaning. This guide element can for instance be a hold-down grid that is adjusted to the correct height by a spindle. The drawbacks to this solution lie in the fact that the device is not self-adjusting and in the fact that only objects of the same height can be cleaned without a new adjustment being necessary.

The invention has for its object to provide a device which is structurally simple, which itself adjusts the position of the hold-down means at any desired height subject to the height of the object for cleaning and which permits the cleaning of objects with mutually differing heights in random sequence. This is achieved by a washing device with a washing tunnel, an open conveyor for transporting objects for washing, spray nozzles placed under the conveyor for feeding washing liquid under pressure and a number of elements suspended above the conveyor for continuous pivoting between end positions, whereof the one end position is located close to the conveyor and the other at a distance therefrom. Because a pivotable element rests with the underside on an object for cleaning a downward oriented force is exerted on the object for cleaning. This force prevents a vertical movement of the object for cleaning. The mutual distance between the pivotable elements is smaller than the minimum length of the objects for washing. This ensures that during passage through the cleaning device a minimum of one pivotable element is always in co-action with an object for cleaning.

A preferred embodiment is characterized in that the pivotally suspended elements are tapering. Conceivable here is the situation in which a pivotable element is pushed so far forward by the leading surface of an object for cleaning that the underside of this element is situated in front of the underside of the following pivotable element. Due to the tapering form the elements do not make contact.

The washing device is preferably further characterized in that each element is pivotally suspended at two locations, each element has on the underside a portion running parallel to the transverse direction of the conveyor and each element is formed from bar material. This embodiment is structurally simple and solid and guarantees a good contact between the object for cleaning and the pivotable element.

The conveyor preferably contains gripping elements. They can limit a shifting of the objects for cleaning in a direction opposed to the transporting direction. When a pivotable element is pushed up by an object for cleaning a force opposed to the transporting direction is exerted on the object for cleaning. In order now to prevent the object for cleaning beginning to shift over the conveyor, it is recommended to arrange on the conveyor gripping elements, for instance ridges, with which the shifting is limited.

The invention will be further elucidated with reference to the annexed drawings, wherein:
Figure 1 shows a perspective view of a washing device with positioning elements according to the present invention, and
Figure 2 shows a perspective detail view of a number of mutually crossing tapering pivotable elements.

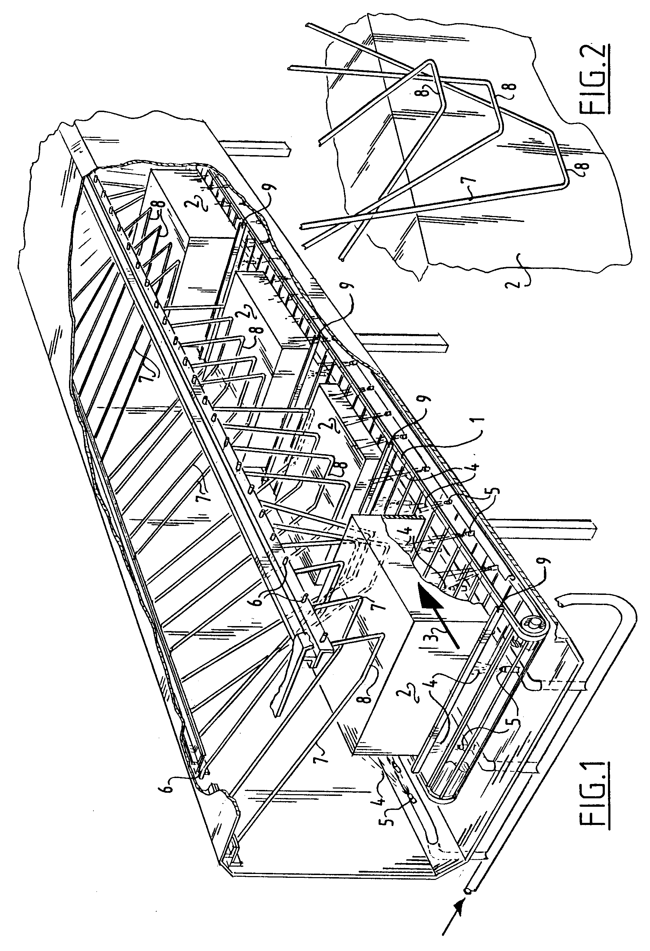

In figure 1 the conveyor 1 moves the objects 2 for cleaning in the direction of arrow 3. A force is applied in vertical direction to the objects for cleaning 2 by the jets of washing liquid 4 from the spray nozzles 5. The vertically pivotable elements 7 are suspended at two positions 6. The undersides 8 of the pivotable elements 7 do not make mutual contact because the pivotable elements 7 are tapering. Gripping elements 9 are arranged on the conveyor belt 1.

Figure 2 shows three tapering pivotable elements 7 which have been pushed up to a greater or lesser degree by the object for cleaning 2. Due to the tapering form of the pivotable elements 7 it is possible that an element 7 situated in front of another pivotable element 7 in the transporting direction 3 is pushed up so much further that it moves across the following element 7. Due to the tapering form the pivotable elements 7 do not come into mutual contact in this manner and thus do not limit each other in their freedom of movement.

## Claims

1. Washing device comprising a washing tunnel, an open conveyor (1) for transporting objects (2) for washing, spray nozzles (5) placed under the conveyor (1) for feeding washing liquid (4) under pressure and a number of elements (7) suspended above the conveyor (1) for continuous pivoting between end positions, whereof the one end position is located close to the conveyor (1) and the other at a distance therefrom.

2. Washing device as claimed in claim 1, **characterized in that** the pivotally suspended elements (7) are tapering.

3. Washing device as claimed in claims 1 and 2, **characterized in that** each element (7) is pivotally suspended at two positions (6), each element (7) has on the underside (8) a portion running parallel to the transverse direction of the conveyor (1) and each element (7) is formed from bar material.

4. Washing device as claimed in claims 1-3, **characterized in that** the conveyor (1) contains gripping elements (9).
